# FASCICULE DE BREVET EUROPEEN

(11) **EP 4 142 240 B1**
(45) Date de publication et mention de la délivrance du brevet: **16.04.2025**
(21) Numéro de dépôt: 22191142.3
(22) Date de dépôt: 19.08.2022
(51) Int. Cl.: H04L 41/12, H04L 41/00, H04W 84/12, H04W 84/20

(54) **PROCEDE DE GESTION D'UNE FONCTION CONTROLEUR PAR UN EQUIPEMENT D'UN RESEAU D'ACHEMINEMENT**
VERFAHREN ZUR VERWALTUNG EINER CONTROLLER-FUNKTION DURCH EIN GERÄT EINES ROUTER-NETZWERKS
METHOD FOR MANAGING A CONTROLLER FUNCTION BY A DEVICE OF A ROUTING NETWORK

(30) Priorité: 23.08.2021 FR 2108832
(43) Date de publication de la demande: 01.03.2023
(73) Titulaire: Sagemcom Broadband SAS, 92270 Bois-Colombes (FR)
(72) Inventeur: LE ROUX, Sylvain, 92500 RUEIL MALMAISON (FR)
(74) Mandataire: Cabinet Le Guen Maillet

(56) Documents cités:
- EP-A2- 3 267 623
- US-A1- 2021 211 959

## Description

### DOMAINE TECHNIQUE

La présente invention concerne le domaine des réseaux d'acheminement utilisés pour mettre à disposition un réseau sans fil unifié et concerne plus particulièrement un procédé de gestion d'une fonction contrôleur implémenté par un équipement d'un réseau d'acheminement. La présente invention concerne également un équipement implémentant ledit procédé de gestion.

### ETAT DE LA TECHNIQUE ANTERIEURE

Un réseau sans fil peut être étendu géographiquement grâce à l'utilisation de plusieurs équipements ou points d'accès interconnectés entre eux par un réseau d'acheminement et émettant un réseau sans fil unifié.

La gestion d'un tel réseau d'acheminement est définie par la norme EasyMesh de la Wi-Fi Alliance. Selon la norme EasyMesh, au moins un équipement du réseau d'acheminement comporte une fonction contrôleur. Lorsque la fonction contrôleur dudit équipement est active, l'équipement assure un rôle de contrôleur au sein du réseau d'acheminement et est alors chargé d'effectuer la gestion du réseau d'acheminement. Un équipement qui n'assure pas le rôle de contrôleur, par exemple un équipement dont la fonction contrôleur est inactive ou un équipement ne comportant pas la fonction contrôleur, assure alors un rôle d'agent. Un équipement assurant le rôle de contrôleur peut en outre assurer simultanément le rôle d'agent.

En outre, selon la norme EasyMesh, un seul équipement du réseau d'acheminement est censé, à un instant donné, assurer le rôle de contrôleur afin d'éviter des conflits de gestion.

Toutefois, lorsque plusieurs équipements comportent la fonction contrôleur et sont donc capables d'assurer le rôle de contrôleur, la norme EasyMesh ne définit pas de méthode permettant de sélectionner l'un desdits équipements pour assurer effectivement le rôle de contrôleur.

Une première solution consiste à configurer chaque équipement comportant la fonction contrôleur pour que l'équipement démarre en assurant le rôle d'agent. Un procédé d'élection est ensuite mis en œuvre par le biais d'une action d'un utilisateur pour sélectionner l'équipement assurant le rôle de contrôleur. Une telle action fait par exemple appel à une connexion d'un câble Ethernet ou à une configuration manuelle. Cependant, un tel procédé d'élection est dépendant de l'action de l'utilisateur.

Par ailleurs, un tel procédé d'élection est basé sur l'utilisation de critères de sélection prédéfinis. L'utilisation de tels critères peut aboutir, lorsque la configuration du réseau d'acheminement évolue, à ce qu'un équipement assurant initialement le rôle de contrôleur soit remplacé par un autre équipement du réseau d'acheminement pour assurer le rôle de contrôleur alors même que l'équipement assurant initialement le rôle de contrôleur demeure dans le réseau d'acheminement.

Le document EP 3 267 623 A2 décrit un protocole de gestion, employé par des points d'accès d'un réseau local, pour confirmer que l'un des points d'accès est désigné point d'accès maître, chargé d'allouer des adresses IP aux dispositifs rejoignant le réseau local. Les points d'accès du réseau local peuvent reconfirmer le point d'accès maître par le protocole de gestion lorsque la topologie du réseau local est modifiée.

Il est alors souhaitable de pallier ces inconvénients de l'état de la technique.

Il est notamment souhaitable de fournir une solution qui permette de sélectionner un unique équipement assurant le rôle de contrôleur dans le réseau d'acheminement sans faire appel à une action d'un utilisateur. Il est en outre souhaitable de fournir une solution qui permette de sélectionner dynamiquement un équipement assurant le rôle de contrôleur, autrement dit à chaque fois que la configuration du réseau d'acheminement évolue. Il est également souhaitable de privilégier qu'un équipement assurant le rôle de contrôleur conserve ledit rôle de contrôleur lors d'une évolution de la configuration du réseau d'acheminement. Il est enfin souhaitable de fournir une solution compatible avec la norme EasyMesh et qui autorise une interopérabilité avec tout équipement du réseau d'acheminement.

### EXPOSE DE L'INVENTION

Un objet de la présente invention est de proposer un procédé de gestion d'une fonction contrôleur d'un équipement investigateur, ledit équipement investigateur appartenant à un réseau d'acheminement, le réseau d'acheminement comportant une pluralité d'équipements, chaque équipement du réseau d'acheminement étant capable de gérer un réseau sans fil de sorte que le réseau d'acheminement mette à disposition un réseau sans fil unifié. Au moins un équipement du réseau d'acheminement comporte la fonction contrôleur, et chaque équipement comportant la fonction contrôleur assure un rôle de contrôleur impliquant de gérer le réseau d'acheminement lorsque la fonction contrôleur dudit équipement est active

L'équipement investigateur est pourvu d'un service de contrôle dynamique, chaque équipement pourvu du service de contrôle dynamique comportant la fonction contrôleur et comportant la capacité d'activer et de désactiver la fonction contrôleur sans nécessiter de redémarrage. Le procédé est implémenté par l'équipement investigateur et comporte les étapes de :
- enregistrer un âge de l'équipement investigateur, l'âge d'un équipement étant une durée, déterminée à un instant donné, depuis laquelle ledit équipement assure le rôle de contrôleur,
- diffuser, dès qu'un âge de l'équipement investigateur est enregistré, une requête de découverte initiale destinée à identifier tout équipement du réseau d'acheminement assurant le rôle de contrôleur,
- déterminer, pour chaque réponse à la requête de découverte initiale reçue en provenance d'un équipement, dit équipement répondant, que l'équipement répondant assure le rôle de contrôleur selon une information représentative du rôle de contrôleur présente dans la réponse reçue,

Le procédé comporte en outre, lorsque la fonction contrôleur de l'équipement investigateur est active à l'instant de la diffusion de la requête de découverte initiale, les étapes de :
- obtenir, dans la réponse reçue, l'âge de l'équipement répondant, et
- désactiver la fonction contrôleur de l'équipement investigateur si l'âge de l'équipement investigateur est inférieur à l'âge de l'équipement répondant.

Ainsi, le procédé de gestion permet de sélectionner un unique équipement assurant le rôle de contrôleur lorsqu'un conflit de gestion résultant de deux équipements assurant le rôle de contrôleur apparaît. Le procédé de gestion ne nécessite pas d'action externe telle que l'intervention d'un utilisateur.

En outre, le procédé de gestion privilégie la conservation du rôle de contrôleur par l'équipement qui assure ledit rôle de contrôleur avec la plus grande ancienneté. Le procédé de gestion limite ainsi la présence de perturbations dans l'organisation du réseau d'acheminement lors d'une évolution de configuration.

Selon un mode de réalisation particulier, la requête de découverte initiale est en outre destinée à identifier tout équipement du réseau d'acheminement pourvu du service de contrôle dynamique. Le procédé comporte en outre :
- déterminer, pour chaque réponse à la requête de découverte initiale reçue en provenance d'un équipement répondant, que l'équipement répondant est pourvu du service de contrôle dynamique selon une information représentative du service de contrôle dynamique présente dans la réponse reçue,
- désactiver la fonction contrôleur de l'équipement investigateur si l'équipement répondant assure le rôle de contrôleur et est dépourvu du service de contrôle dynamique, lorsque la fonction contrôleur de l'équipement investigateur est active à l'instant de la diffusion de la requête de découverte initiale. En outre, l'étape d'obtenir, dans la réponse reçue, l'âge de l'équipement répondant, est effectuée si l'équipement répondant assurant le rôle de contrôleur est en outre pourvu du service de contrôle dynamique.

Ainsi, l'interopérabilité du procédé de gestion avec un équipement dépourvu du service de contrôle dynamique et donc n'implémentant pas ledit procédé de gestion, est garantie.

Selon un mode de réalisation particulier, le procédé comporte en outre d'émettre dans le réseau d'acheminement un message de changement de configuration lorsque l'équipement investigateur désactive la fonction contrôleur, le message de changement de configuration comportant un identifiant de l'équipement répondant assurant le rôle de contrôleur de sorte que chaque autre équipement peut envoyer audit équipement répondant une demande de renouvellement de configuration.

Ainsi, il est aisé pour chaque équipement du réseau d'acheminement d'obtenir une nouvelle configuration lorsque l'équipement investigateur désactive sa fonction contrôleur.

Selon un mode de réalisation particulier, le procédé comporte en outre, lorsque la fonction contrôleur l'équipement investigateur est inactive à l'instant de la diffusion de la requête de découverte initiale :
- Diffuser une requête de découverte additionnelle identique à la requête de découverte initiale lorsqu'aucune réponse reçue pendant un premier délai prédéfini suivant la diffusion de la requête de découverte précédente ne permet d'identifier un autre équipement du réseau d'acheminement assurant le rôle de contrôleur,
- Activer la fonction contrôleur dudit équipement lorsque le nombre de requêtes de découverte additionnelles émises atteint un seuil prédéterminé et si aucune réponse reçue pendant le premier délai prédéfini suivant la diffusion de la requête de découverte précédente ne permet d'identifier un autre équipement du réseau d'acheminement assurant le rôle de contrôleur.

Ainsi, le procédé de gestion permet de sélectionner un équipement pour assurer le rôle de contrôleur lorsqu'une évolution de la configuration du réseau d'acheminement entraîne l'absence d'équipement assurant ledit rôle de contrôleur.

Selon un mode de réalisation particulier, le procédé comporte en outre, lorsque la fonction contrôleur de l'équipement investigateur est inactive à l'instant de la diffusion de la requête de découverte initiale :
- Diffuser une requête de découverte additionnelle identique à la requête de découverte initiale lorsqu'aucune réponse reçue pendant un premier délai prédéfini suivant la diffusion de la requête de découverte précédente ne permet d'identifier un autre équipement du réseau d'acheminement assurant le rôle de contrôleur,
- Activer la fonction contrôleur dudit équipement lorsqu'aucune réponse reçue ne permet d'identifier un autre équipement du réseau d'acheminement assurant le rôle de contrôleur, et si un deuxième délai prédéfini compté à partir de la diffusion de la requête de découverte initiale est écoulé (314), le deuxième délai prédéfini étant supérieur au premier délai prédéfini.

Selon un mode de réalisation particulier, le procédé comporte en outre d'enregistrer un nouvel âge de l'équipement investigateur et diffuser une nouvelle requête de découverte initiale lorsque le premier délai prédéfini compté à partir de la diffusion de la requête de découverte initiale précédente est écoulé.

Ainsi, l'équipement investigateur vérifie à intervalles réguliers que le rôle de contrôleur C est assuré par un unique équipement dans le réseau d'acheminement et peut activer et désactiver sa fonction contrôleur de manière dynamique, autrement dit en tenant compte de l'évolution temporelle de la configuration du réseau d'acheminement.

Selon un mode de réalisation particulier, chaque étape d'activer ou de désactiver la fonction contrôleur est effectuée si aucune activation ou désactivation de la fonction contrôleur de l'équipement investigateur n'a été effectuée depuis la diffusion de la requête initiale précédente. L'invention concerne également un équipement investigateur appartenant à un réseau d'acheminement, le réseau d'acheminement comportant une pluralité d'équipements, chaque équipement du réseau d'acheminement étant capable de gérer un réseau sans fil de sorte que le réseau d'acheminement mette à disposition un réseau sans fil unifié. Au moins un équipement du réseau d'acheminement comportant la fonction contrôleur, chaque équipement comportant la fonction contrôleur assure un rôle de contrôleur impliquant de gérer le réseau d'acheminement lorsque la fonction contrôleur dudit équipement est active. L'équipement investigateur est pourvu d'un service de contrôle dynamique, chaque équipement pourvu du service de contrôle dynamique comportant la fonction contrôleur et comportant la capacité d'activer et de désactiver la fonction contrôleur sans nécessiter de redémarrage. L'équipement investigateur comporte :
- des moyens pour enregistrer un âge de l'équipement investigateur, l'âge d'un équipement étant une durée, déterminée à un instant donné, depuis laquelle ledit équipement assure le rôle de contrôleur,
- des moyens pour diffuser, dès qu'un âge de l'équipement investigateur est enregistré, une requête de découverte initiale destinée à identifier tout équipement du réseau d'acheminement assurant le rôle de contrôleur,
- des moyens pour déterminer, pour chaque réponse à la requête de découverte initiale reçue en provenance d'un équipement, dit équipement répondant, que l'équipement répondant assure le rôle de contrôleur selon une information représentative du rôle de contrôleur présente dans la réponse reçue,
et l'équipement investigateur comporte en outre :
- des moyens pour obtenir, dans la réponse reçue, l'âge de l'équipement répondant lorsque la fonction contrôleur de l'équipement investigateur est active à l'instant de la diffusion de la requête de découverte initiale, et
- des moyens pour désactiver la fonction contrôleur de l'équipement investigateur si l'âge de l'équipement investigateur est inférieur à l'âge de l'équipement répondant.

L'invention concerne également un réseau d'acheminement dans lequel le procédé mentionné ci-dessus est implémenté, dans l'un quelconque de ses modes de réalisation, par chaque équipement pourvu du service de contrôle dynamique du réseau d'acheminement.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme est exécuté par le processeur.

L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau d'acheminement dans une première configuration, comportant au moins un équipement pourvu d'un service de contrôle dynamique ;
[Fig. 2] illustre schématiquement un procédé de gestion d'une fonction contrôleur d'un équipement pourvu d'un service de contrôle dynamique, dit équipement investigateur ;
[Fig. 3A] illustre schématiquement une étape du procédé de gestion selon un premier mode de réalisation, ladite étape étant implémentée lorsque la fonction contrôleur de l'équipement investigateur est initialement inactive ;
[Fig. 3B] illustre schématiquement une étape du procédé de gestion selon un second mode de réalisation, ladite étape étant implémentée lorsque la fonction contrôleur de l'équipement investigateur est initialement inactive ;
[Fig. 4] illustre schématiquement un exemple d'une architecture matérielle d'un équipement investigateur du réseau d'acheminement.
[Fig. 5A] illustre schématiquement le réseau d'acheminement dans une deuxième configuration ;
[Fig. 5B] illustre schématiquement le réseau d'acheminement dans une troisième configuration ;
[Fig. 5C] illustre schématiquement le réseau d'acheminement dans une quatrième configuration ;
[Fig. 6A] illustre schématiquement un échange de messages entre un équipement investigateur et un équipement répondant, selon un premier exemple de réalisation ;
[Fig. 6B] illustre schématiquement un échange de messages entre un équipement investigateur et un équipement répondant, selon un second exemple de réalisation ;
[Fig. 7A] illustre schématiquement un échange de messages entre un équipement investigateur et un équipement répondant, selon un troisième exemple de réalisation ;
[Fig. 7B] illustre schématiquement un échange de messages entre un équipement investigateur et un équipement répondant, selon un quatrième exemple de réalisation ; et
[Fig. 8] illustre schématiquement un échange de messages entre un équipement investigateur et un équipement répondant, selon un cinquième exemple de réalisation.

### EXPOSE DETAILLE DE MODES DE REALISATION

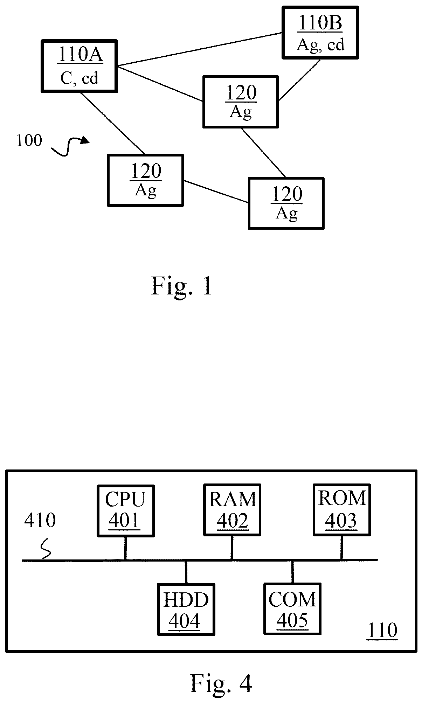

La **Fig. 1** illustre ainsi schématiquement un réseau d'acheminement 100, dans une première configuration, comportant au moins un équipement 110A, 110B, pourvu d'un service de contrôle dynamique cd.

Chaque réseau d'acheminement 100 est un réseau de communication destiné à interconnecter entre eux plusieurs équipements également appelés points d'accès, afin de mettre à disposition un réseau sans fil unifié. Chaque équipement dudit réseau d'acheminement 100 est capable de gérer un réseau sans fil ayant des caractéristiques du réseau sans fil unifié telles qu'un identifiant comme par exemple le SSID (pour « Service Set IDentifier » en anglais) du réseau sans fil unifié et un mot de passe, ce qui permet par exemple d'étendre géographiquement la couverture dudit réseau sans fil unifié.

La gestion du réseau d'acheminement 100 est définie par exemple par la norme EasyMesh, ou par d'autres solutions de gestion de maillage d'équipements Wi-Fi pour former un réseau sans-fil maillé et unifié. Au moins un équipement du réseau d'acheminement 100 comporte une fonction contrôleur, ladite fonction contrôleur pouvant être active ou inactive. Lorsque la fonction contrôleur d'un équipement est active, l'équipement assure un rôle de contrôleur C au sein du réseau d'acheminement et est alors chargé de gérer le réseau d'acheminement. Tout équipement dont la fonction contrôleur est inactive ou ne comportant pas de fonction contrôleur assure un rôle d'agent Ag. Un équipement assurant le rôle de contrôleur peut en outre assurer simultanément le rôle d'agent.

En outre, selon la norme EasyMesh, et également pour les autres solutions de gestion d'un réseau sans-fil maillé, un seul équipement de chaque réseau d'acheminement 100 doit assurer le rôle de contrôleur C lorsque ledit réseau d'acheminement est dans un régime permanent, autrement dit tant que le réseau d'acheminement 100 ne subit pas de modification structurelle résultant d'un ajout ou d'une suppression d'au moins un équipement ou d'une modification du rôle assuré par un équipement.

Dans la première configuration, le réseau d'acheminement 100 comporte ainsi l'équipement 110A qui assure le rôle de contrôleur C et comporte en outre l'équipement 110B et des équipements 120 qui assurent le rôle d'agent Ag.

En outre, les équipements 110A et 110B sont pourvus d'un service de contrôleur dynamique. Chaque équipement 110A, 110B pourvu du service de contrôleur dynamique a la capacité d'activer et de désactiver la fonction contrôleur afin d'assurer ou non le rôle de contrôleur C. L'activation et la désactivation de la fonction contrôleur ne nécessite pas de redémarrer l'équipement. Un composant de gestion capable d'activer ou désactiver une brique logicielle implémentant la fonction contrôleur est par exemple utilisé pour activer ou désactiver la fonction contrôleur sans nécessiter de redémarrage.

Ainsi, dans la première configuration du réseau d'acheminement 100, l'équipement 110A assure le rôle de contrôleur C, autrement dit la fonction contrôleur de l'équipement 110A est active. En revanche, l'équipement 110B assure le rôle d'agent Ag, autrement dit la fonction contrôleur de l'équipement 110B est inactive.

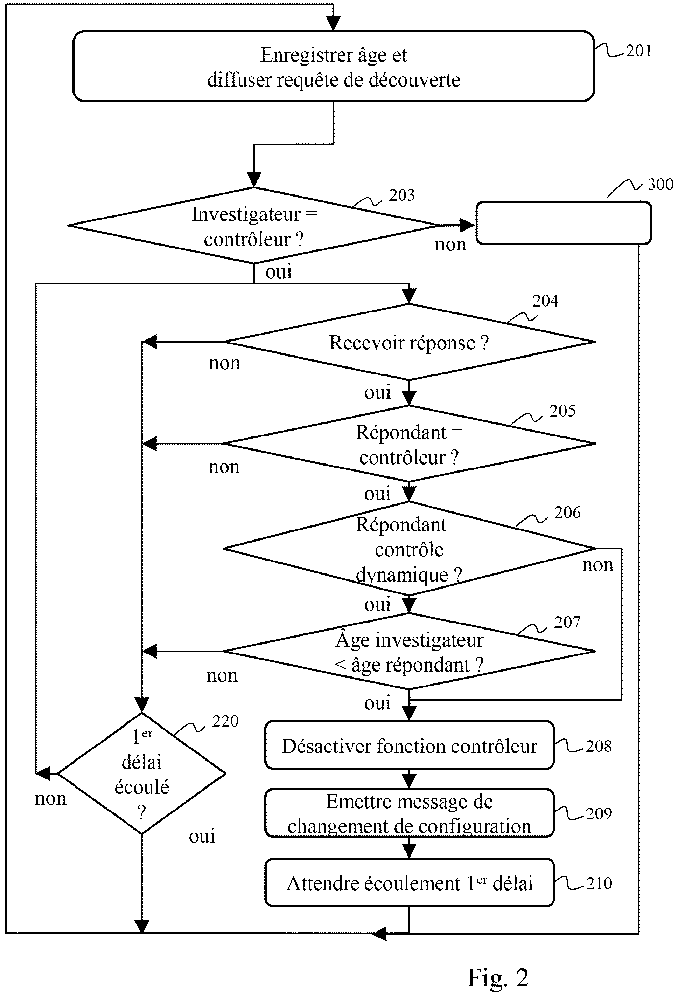

La **Fig. 2** illustre schématiquement un procédé de gestion de la fonction contrôleur d'un équipement 110A, 110B pourvu du service de contrôleur dynamique, dit équipement investigateur 110. Ledit procédé de gestion est destiné à activer et désactiver la fonction contrôleur de l'équipement investigateur.

Le procédé de gestion est implémenté périodiquement par chaque équipement 110A, 110B pourvu du service de contrôle dynamique cd d'un réseau d'acheminement 100. Dit autrement, chaque équipement investigateur diffuse à intervalles réguliers, par exemple toutes les 60 secondes, une requête de découverte afin d'identifier, dans le réseau d'acheminement 100, d'autres équipements assurant le rôle de contrôleur C et de décider ou non d'activer ou de désactiver sa fonction contrôleur. Le procédé de gestion vise à résoudre des conflits pouvant résulter de de l'absence d'équipement assurant le rôle de contrôleur C ou d'au moins deux équipements assurant le rôle de contrôleur C dans le réseau d'acheminement 100.

Dans une première étape 201, l'équipement investigateur détermine et enregistre son âge à l'instant présent. L'âge d'un équipement pourvu d'un service de contrôle dynamique cd est une durée, déterminée à un instant donné, depuis laquelle la fonction contrôleur de l'équipement est active. Si la fonction contrôleur d'un équipement est inactive, l'âge dudit équipement est nul. En outre, l'équipement investigateur diffuse, dans le réseau d'acheminement 100, une requête de découverte initiale RQ_DECOUV destinée à identifier tout équipement du réseau d'acheminement 100 qui assure la fonction contrôleur et identifier tout équipement du réseau d'acheminement 100 qui est pourvu du service de contrôle dynamique. La requête de découverte initiale RQ DECOUV est émise dès que l'âge de l'équipement investigateur est enregistré.

Une requête de découverte initiale RQ_DECOUV comporte une information représentative du rôle de contrôleur C, indiquant une recherche dans le réseau d'acheminement 100 de tout équipement assurant le rôle de contrôleur C, et comporte une information représentative du service de contrôle dynamique cd, indiquant une recherche dans le réseau d'acheminement 100 de tout équipement pourvu du service de contrôle dynamique cd.

Selon un mode de réalisation particulier, la requête de découverte initiale RQ_DECOUV est conforme à un format de message défini par la norme IEEE1905.1 et comporte des champs de format TLV (pour « Type Longueur Valeur »). La requête de découverte initiale RQ_DECOUV de l'équipement investigateur comporte ainsi un premier champ de format TLV comportant la valeur 0x01, la valeur 0x01 étant représentative du rôle de contrôleur C, et comporte un deuxième champ de format TLV comportant la valeur 0x02, la valeur 0x02 étant représentative du service de contrôle dynamique cd. L'utilisation du format de message standardisé défini par la norme IEEE1905.1 et comportant des champs de format TLV permet ainsi de garantir la compatibilité du procédé de gestion avec la norme EasyMesh ou avec d'autres solutions de gestion d'un réseau sans-fil maillé.

Dans une étape suivante 203, l'équipement investigateur détermine si sa fonction contrôleur est active au moment de la diffusion de la requête de découverte RQ_DECOUV. Si c'est le cas, une étape 204 est effectuée. Sinon, l'équipement investigateur considère que sa fonction contrôleur est inactive, autrement dit qu'il assure le rôle d'agent Ag, et effectue une étape 300.

A l'étape 204, l'équipement investigateur détermine si une réponse REP à la requête de découverte initiale RQ_DECOUV est reçue en provenance d'un autre équipement, dit équipement répondant, du réseau d'acheminement 100. Si une réponse REP est reçue, une étape 205 est effectuée. Sinon, une étape 220 est effectuée.

A l'étape 220, l'équipement investigateur détermine si un premier délai prédéfini est écoulé. Le premier délai prédéfini est compté à partir de la diffusion de la requête de découverte précédente qui correspond à la requête de découverte initiale RQ_DECOUV diffusée par l'équipement investigateur à l'étape 201 précédente. Selon un mode de réalisation, le premier délai prédéfini est inférieur ou égal à 60 secondes. Si le premier délai prédéfini est écoulé, l'équipement investigateur retourne à l'étape 201. Ainsi, le procédé de gestion est implémenté par l'équipement investigateur à intervalles réguliers. Sinon, l'équipement investigateur retourne à l'étape 204.

A l'étape 205, l'équipement investigateur analyse la réponse REP afin de déterminer si l'équipement répondant assure le rôle de contrôleur C.

Si l'équipement investigateur détecte dans la réponse REP envoyée par l'équipement répondant, une information représentative du rôle de contrôleur C, l'équipement investigateur détermine que l'équipement répondant assure le rôle de contrôleur C. C'est le cas par exemple, lorsque la réponse REP conforme au format défini par la norme IEEE1905.1 comporte un champ de format TLV comportant la valeur 0x00. Une étape 206 est alors effectuée.

Dans le cas contraire, si l'équipement investigateur ne détecte pas dans la réponse REP d'information représentative du rôle de contrôleur C, l'équipement investigateur détermine que l'équipement répondant n'assure pas le rôle de contrôleur C. L'étape 220 est alors effectuée.

A l'étape 206, l'équipement investigateur analyse la réponse REP afin de déterminer si l'équipement répondant est pourvu du service de contrôle dynamique cd.

Si l'équipement investigateur détecte dans la réponse REP une information représentative du service de contrôle dynamique cd, telle qu'un champ de format TLV comportant la valeur 0x02, l'équipement investigateur détermine que l'équipement répondant est pourvu du service de contrôle dynamique cd. Une étape 207 est alors effectuée.

Dans le cas contraire, si l'équipement investigateur ne détecte pas, dans la réponse REP, d'information représentative du service de contrôle dynamique cd, l'équipement investigateur détermine que l'équipement répondant n'est pas pourvu du service de contrôle dynamique cd. Une étape 208 est alors effectuée. L'interopérabilité du procédé de gestion avec un équipement dépourvu du service de contrôle dynamique et donc n'implémentant pas ledit procédé de gestion est ainsi garantie.

A l'étape 207, l'équipement investigateur obtient l'âge de l'équipement répondant dans la réponse REP reçue. En effet, toute réponse REP d'un équipement répondant comportant une information représentative du service de contrôle dynamique cd comporte en outre une information représentative de l'âge dudit équipement répondant.

Par exemple, dans le cas où la réponse REP de l'équipement répondant est conforme au format défini par la norme IEEE 1905.1, la réponse REP comporte alors un champ de format TLV, dit champ « âge », comportant un identifiant représentatif d'un type âge et une variable représentative de l'âge de l'équipement répondant.

Un champ « âge » comporte par exemple un premier élément d'une taille de 1 octet et de valeur hexadécimale 0xDD indiquant un type de champ spécifique à un fournisseur, un deuxième élément d'une taille de 1 octet et de valeur variable indiquant le nombre d'octets d'éléments suivants appartenant audit champ de format TLV, comme par exemple 12 octets, un troisième élément d'une taille de 3 octets et de valeur hexadécimale 0x08-D5-9D correspondant à un identifiant unique d'un organisation utilisant ledit champ de format TLV, un quatrième élément d'une taille de 1 octet et de valeur hexadécimale 0x01 correspondant à un identifiant représentatif du type âge, et un cinquième élément d'une taille de 8 octets et valeur variable, ladite valeur variable étant représentative de l'âge de l'équipement émettant ledit champ de format TLV.

L'équipement investigateur compare en outre son propre âge avec l'âge de l'équipement répondant. Si l'âge de l'équipement investigateur est inférieur à l'âge de l'équipement répondant, l'équipement investigateur effectue l'étape 208. Sinon, l'étape 220 est effectuée. Le procédé de gestion privilégie ainsi la conservation du rôle de contrôleur par l'équipement qui assure ledit rôle de contrôleur avec la plus grande ancienneté. Le procédé de gestion limite ainsi la présence de perturbations dans l'organisation du réseau d'acheminement lors d'une évolution de configuration.

A l'étape 208, l'équipement investigateur décide de désactiver sa fonction contrôleur. L'équipement répondant est alors considéré comme le seul équipement assurant le rôle de contrôleur C dans le réseau d'acheminement 100. Le procédé de gestion permet ainsi de sélectionner un unique équipement assurant le rôle de contrôleur C dans le réseau d'acheminement sans nécessiter d'action externe telle que l'intervention d'un utilisateur.

Dans une étape 209 suivante, l'équipement investigateur diffuse dans le réseau d'acheminement 100 un message de changement de configuration CONFIG_RENEW. Le message de changement de configuration CONFIG_RENEW comporte un identifiant de l'équipement répondant, considéré comme le seul équipement assurant le rôle de contrôleur C, de sorte que chaque autre équipement peut envoyer audit équipement répondant une demande de renouvellement de configuration.

Dans une étape 210 suivante, l'équipement investigateur attend l'écoulement du premier délai prédéfini. Lorsque le premier délai prédéfini est écoulé, l'équipement investigateur retourne à l'étape 201. Ainsi, l'équipement investigateur vérifie à intervalles réguliers que le rôle de contrôleur C est assuré par un unique équipement dans le réseau d'acheminement et peut activer et désactiver sa fonction contrôleur de manière dynamique, autrement dit en tenant compte de l'évolution temporelle de la configuration du réseau d'acheminement.

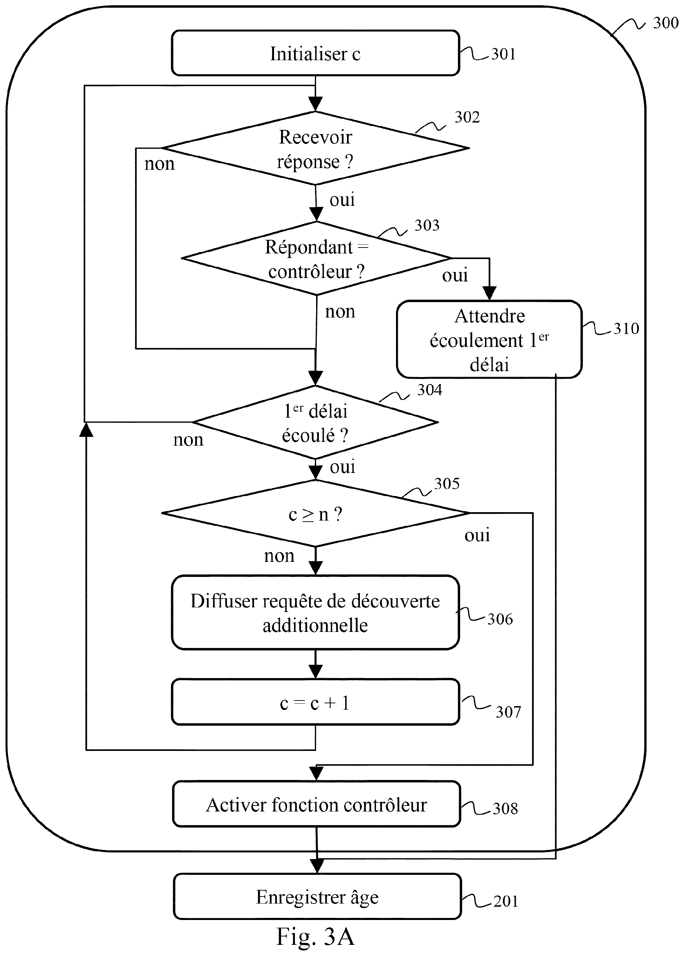

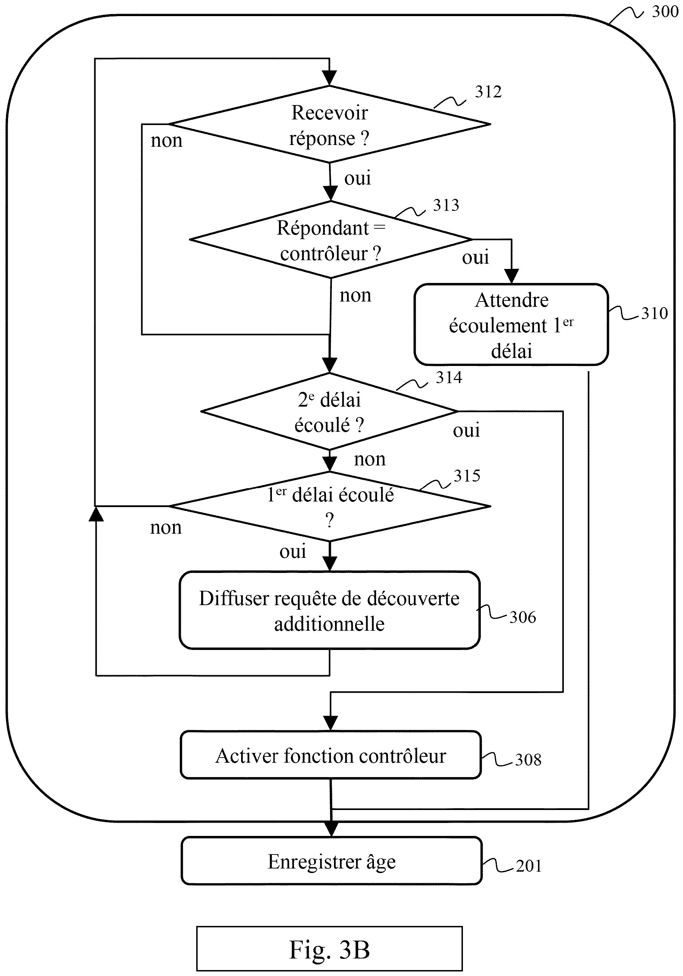

A l'étape 300, l'équipement investigateur effectue une succession d'étapes décrites dans la Fig. 3. L'équipement investigateur retourne ensuite à l'étape 201.

La Fig. 3A illustre schématiquement l'étape 300 du procédé de gestion selon un premier mode de réalisation. L'étape 300 est effectuée à la suite de l'étape 203 lorsque la fonction contrôleur de l'équipement investigateur est inactive au moment de la diffusion de la requête de découverte initiale RQ_DECOUV.

Dans une première étape 301, l'équipement investigateur initialise un compteur *c* à une valeur initiale prédéfinie, par exemple *c* = *0*.

Dans une étape 302 suivante, l'équipement investigateur détermine si une réponse REP à la requête de découverte initiale RQ_DECOUV ou à une requête de découverte additionnelle RQ_DECOUV_B est reçue en provenance d'un autre équipement, dit équipement répondant, du réseau d'acheminement 100. Si une réponse REP est reçue, une étape 303 est effectuée. Sinon, une étape 304 est effectuée.

A l'étape 303, similaire à l'étape 205, l'équipement investigateur détermine si l'équipement répondant assure le rôle de contrôleur C. Si l'équipement investigateur détecte, dans la réponse REP envoyée par l'équipement répondant, la présence d'une information représentative du rôle de contrôleur C, telle que le champ comportant la valeur 0x00, l'équipement investigateur détermine que l'équipement répondant assure le rôle de contrôleur C et effectue une étape 310. Sinon, l'étape 304 est effectuée.

A l'étape 310, similaire à l'étape 210, l'équipement investigateur attend l'écoulement du premier délai prédéfini. Lorsque le premier délai prédéfini est écoulé, l'équipement investigateur retourne à l'étape 201.

A l'étape 304, l'équipement investigateur détermine si le premier délai prédéfini est écoulé. Le premier délai prédéfini est compté à partir de la diffusion de la requête de découverte précédente. La requête de découverte précédente correspond à la requête de découverte initiale RQ_DECOUV, diffusée à l'étape 201, tant que le compteur c est égal à sa valeur initiale et correspond à la requête de découverte additionnelle RQ_DECOUV_B précédente diffusée lors d'une étape 306 lorsque le compteur est différent de sa valeur initiale. Si le premier délai prédéfini est écoulé, une étape 305 est effectuée. Sinon, l'équipement investigateur retourne à l'étape 302.

A l'étape 305 suivante, l'équipement investigateur détermine si le compteur *c* atteint un seuil prédéterminé *n.* Si le seuil prédéterminé *n* est atteint, par exemple *n* = *1*, une étape 308 est effectuée. Sinon, une étape 306 est effectuée. Selon d'autres exemples, le seuil prédéterminé a une valeur comprise entre 1 et 10.

A l'étape 306, l'équipement investigateur diffuse une requête de découverte additionnelle RQ_DECOUV_B, identique à la requête de découverte initiale RQ_DECOUV émise précédemment à l'étape 201.

Dans une étape 307 suivante, l'équipement investigateur incrémente le compteur c, par exemple d'une unité. L'équipement investigateur retourne ensuite à l'étape 302.

A l'étape 308, l'équipement investigateur considère qu'aucun autre équipement présent dans le réseau d'acheminement 100 n'assure le rôle de contrôleur C. L'équipement investigateur décide alors d'activer sa fonction contrôleur. L'équipement investigateur effectue ensuite l'étape 210 décrite à la Fig. 2 puis retourne ensuite à l'étape 201 décrite à la Fig. 2.

La **Fig. 3B** illustre schématiquement l'étape 300 du procédé de gestion selon un second exemple de réalisation. L'étape 300 est effectuée à la suite de l'étape 203 lorsque la fonction contrôleur de l'équipement investigateur est inactive au moment de la diffusion de la requête de découverte initiale RQ_DECOUV.

Dans une première étape 312, l'équipement investigateur détermine si une réponse REP à la requête de découverte initiale RQ_DECOUV ou à une requête de découverte additionnelle RQ_DECOUV_B est reçue en provenance d'un autre équipement, dit équipement répondant, du réseau d'acheminement 100. Si une réponse REP est reçue, une étape 313 est effectuée. Sinon, une étape 314 est effectuée.

A l'étape 313, similaire à l'étape 205, l'équipement investigateur détermine si l'équipement répondant assure le rôle de contrôleur C. Si l'équipement investigateur détecte, dans la réponse REP envoyée par l'équipement répondant, la présence d'une information représentative du rôle de contrôleur C, tel que le champ comportant la valeur 0x00, l'équipement investigateur détermine que l'équipement répondant assure le rôle de contrôleur C et effectue une étape 310. Sinon, l'étape 304 est effectuée.

A l'étape 310, similaire à l'étape 210, l'équipement investigateur attend l'écoulement du premier délai prédéfini. Lorsque le premier délai prédéfini est écoulé, l'équipement investigateur retourne à l'étape 201.

A l'étape 314, l'équipement investigateur détermine si un deuxième délai prédéfini est écoulé. Le deuxième délai prédéfini est compté à partir de la diffusion de la requête de découverte initiale RQ_DECOUV, émise à l'étape 201 précédente. Si le deuxième délai prédéfini est écoulé, l'étape 308 est effectuée. Sinon, l'équipement investigateur effectue une étape 315. Le deuxième délai prédéfini est supérieur au premier délai prédéfini.

A l'étape 315, l'équipement investigateur détermine si le premier délai prédéfini, compté à partir de la diffusion de la requête de découverte précédente, est écoulé. La requête de découverte précédente peut être la requête de découverte initiale RQ_DECOUV, émise à l'étape 201 ou une requête de découverte additionnelle RQ_DECOUV_B précédente diffusée lors d'une étape 306. Si le premier délai prédéfini est écoulé, l'étape 306 est effectuée. Sinon, l'équipement investigateur retourne à l'étape 312.

A l'étape 306, l'équipement investigateur diffuse une requête de découverte additionnelle RQ_DECOUV_B, identique à la requête de découverte initiale RQ_DECOUV émise précédemment à l'étape 201. L'équipement investigateur retourne ensuite à l'étape 312.

A l'étape 308, l'équipement investigateur active sa fonction contrôleur. L'équipement investigateur retourne ensuite à l'étape 201 décrite à la Fig. 2.

La **Fig. 4** illustre schématiquement un exemple d'une architecture matérielle d'un équipement investigateur 110 du réseau d'acheminement 100.

L'équipement investigateur 110 comporte alors, reliés par un bus de communication 410 : un processeur ou CPU (« Central Processing Unit » en anglais) 401 ; une mémoire vive RAM (« Random Access Memory » en anglais) 402 ; une mémoire morte ROM (« Read Only Memory » en anglais) 403 ; une unité de stockage ou un lecteur de support de stockage, tel qu'un disque dur HDD (« Hard Disk Drive » en anglais) 404 ; et une interface 405 permettant de communiquer avec chaque autre équipement du réseau d'acheminement 100.

Le processeur 401 est capable d'exécuter des instructions chargées dans la RAM 402 à partir de la ROM 403, d'une mémoire externe (non représentée), d'un support de stockage, ou d'un réseau de communication. Lorsque l'équipement investigateur 110 est mis sous tension, le processeur 401 est capable de lire de la RAM 402 des instructions et de les exécuter. Ces instructions forment un programme d'ordinateur causant l'implémentation, par le processeur 401, de tout ou partie des algorithmes et étapes décrits ici en relation avec l'équipement investigateur 110.

Ainsi, tout ou partie des algorithmes et étapes décrits ci-après en relation avec l'équipement investigateur 110 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

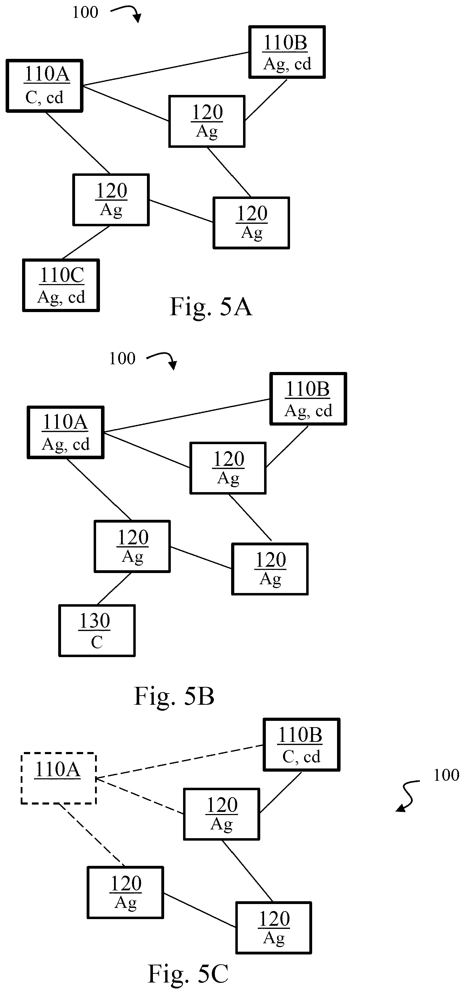

La **Fig. 5A** illustre schématiquement le réseau d'acheminement 100 dans une deuxième configuration.

La deuxième configuration du réseau d'acheminement 100 résulte d'une intégration, par le réseau d'acheminement 100 dans la première configuration, d'un équipement 110C pourvu du service de contrôle dynamique cd. Avant son intégration au réseau d'acheminement 100, ledit équipement 110C assure le rôle de contrôleur C, autrement dit, la fonction contrôleur de l'équipement 110C est initialement active.

Un réseau d'acheminement 100 est dans un régime transitoire lorsque ledit réseau d'acheminement subit une modification structurelle résultant d'un ajout ou d'une suppression d'au moins un équipement ou d'une modification d'une fonction exécutée par un équipement. Par exemple, lorsque le réseau d'acheminement 100 passe de la première configuration à la deuxième configuration, le réseau d'acheminement 100 est dans un régime transitoire résultant de l'ajout de l'équipement 110C. Le réseau d'acheminement comporte alors deux équipements 110A et 110C exécutant chacun la fonction contrôleur.

L'implémentation du procédé de gestion par chaque équipement 110A, 110B, 110C pourvu du service de contrôleur dynamique permet de sélectionner l'unique équipement exécutant la fonction contrôleur au terme du régime transitoire.

Dans la deuxième configuration, au terme du régime transitoire, le réseau d'acheminement 100 comporte ainsi les trois équipements 110A, 110B et 110C pourvus du service de contrôleur dynamique. Seul l'équipement 110A assure le rôle de contrôleur C. L'équipement 110B conserve le rôle d'agent Ag. L'équipement 110C assure le rôle d'agent Ag après avoir désactivé sa fonction contrôleur. Chaque équipement 120 assure le rôle d'agent Ag.

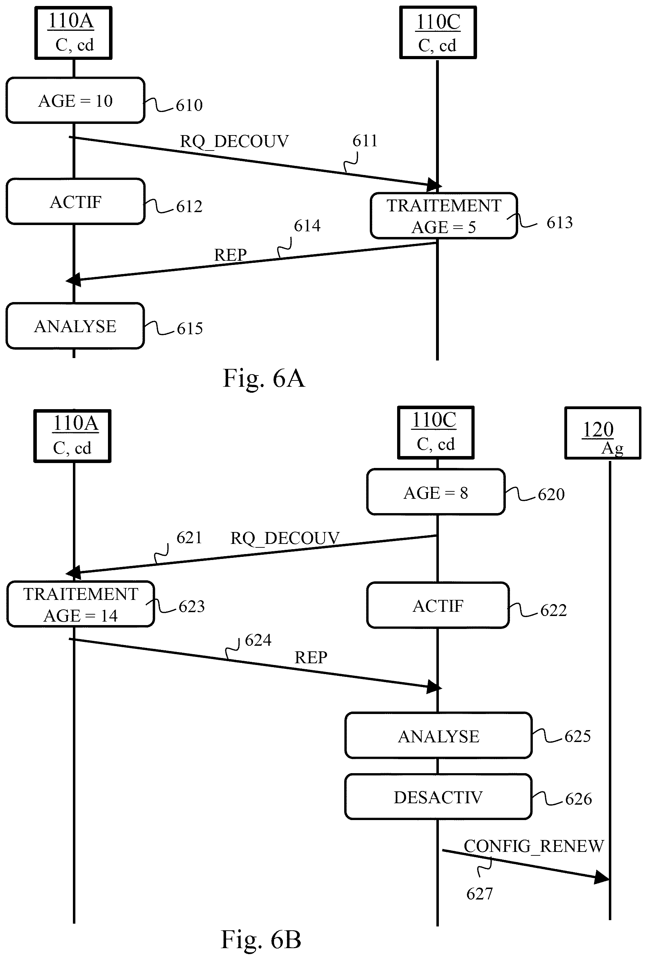

Un exemple d'implémentation du procédé de gestion par l'équipement investigateur 110A pendant le régime transitoire entre la première configuration et la deuxième configuration du réseau d'acheminement 100 est décrit à la Fig. 6A.

Un exemple d'implémentation du procédé de gestion par l'équipement investigateur 110C pendant le régime transitoire entre la première configuration et la deuxième configuration du réseau d'acheminement 100 est décrit à la Fig. 6B. Lorsque l'équipement investigateur 110C, assurant le rôle de contrôleur C, détermine que l'équipement répondant 110A assure également le rôle de contrôleur C et est pourvu du service de contrôle dynamique cd, l'équipement investigateur 110C compare son propre âge à l'âge de l'équipement répondant 110A. L'équipement investigateur 110C décide de désactiver la fonction contrôleur car son propre âge est inférieur à l'âge de l'équipement répondant 110A.

La **Fig. 5B** illustre schématiquement le réseau d'acheminement 100 dans une troisième configuration.

La troisième configuration du réseau d'acheminement 100 résulte d'une intégration, par le réseau d'acheminement 100 dans la première configuration, d'un équipement 130 assurant le rôle de contrôleur et dépourvu du service de contrôle dynamique cd.

Lorsque le réseau d'acheminement 100 passe de la première configuration à la troisième configuration, le réseau d'acheminement 100 est dans un régime transitoire résultant de l'ajout de l'équipement 130. Le réseau d'acheminement 100 comporte alors deux équipements 110A et 130 assurant chacun le rôle de contrôleur C. La mise en œuvre du procédé de gestion par chaque équipement 110A, 110B pourvu du service de contrôleur dynamique permet de sélectionner l'unique équipement devant assurer le rôle de contrôleur C au terme du régime transitoire.

Dans la troisième configuration du réseau d'acheminement 100, au terme du régime transitoire, l'équipement 110A assure le rôle d'agent Ag après avoir désactivé la fonction contrôleur. L'équipement 110B maintient sa fonction contrôleur inactive et continue donc d'assurer le rôle d'agent Ag. L'équipement 130, dépourvu du service de contrôle dynamique cd, conserve le rôle de contrôleur C. Chaque équipement 120 assure le rôle d'agent Ag.

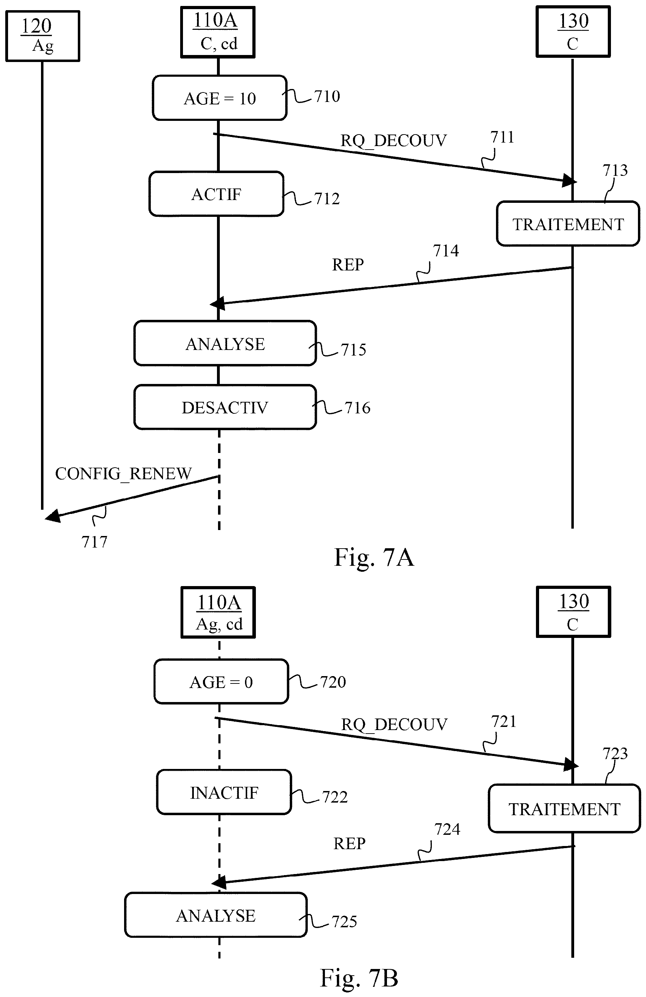

Un exemple d'implémentation du procédé de gestion par l'équipement investigateur 110A pendant le régime transitoire entre la première configuration et la troisième configuration du réseau d'acheminement 100 est décrit à la Fig. 7A. Lorsque l'équipement investigateur 110A assurant le rôle de contrôleur C détermine que l'équipement répondant 130 assure également la fonction contrôleur et est dépourvu du service de contrôle dynamique cd, l'équipement investigateur 110A décide de désactiver sa fonction contrôleur.

La **Fig. 5C** illustre schématiquement le réseau d'acheminement 100 dans une quatrième configuration.

La quatrième configuration du réseau d'acheminement 100 résulte d'une suppression, du réseau d'acheminement 100 dans la première configuration, de l'équipement 110A pourvu du service de contrôleur dynamique. La suppression de l'équipement 110A résulte par exemple d'une extinction ou d'une déconnexion dudit équipement 110A.

Dans la quatrième configuration du réseau d'acheminement 100, seul l'équipement 110B est pourvu du service de contrôle dynamique cd. Chaque équipement 120 assure le rôle d'agent Ag et l'équipement 110B assure le rôle de contrôleur C.

Lorsque le réseau d'acheminement 100 passe de la première configuration à la quatrième configuration, le réseau d'acheminement 100 est dans un régime transitoire résultant de la suppression de l'équipement 110A. Le réseau d'acheminement 100 ne comporte alors plus aucun équipement assurant le rôle de contrôleur C. La mise en œuvre du procédé de gestion par l'équipement 110B pourvu du service de contrôleur dynamique permet de sélectionner un équipement devant assurer le rôle de contrôleur C au terme du régime transitoire.

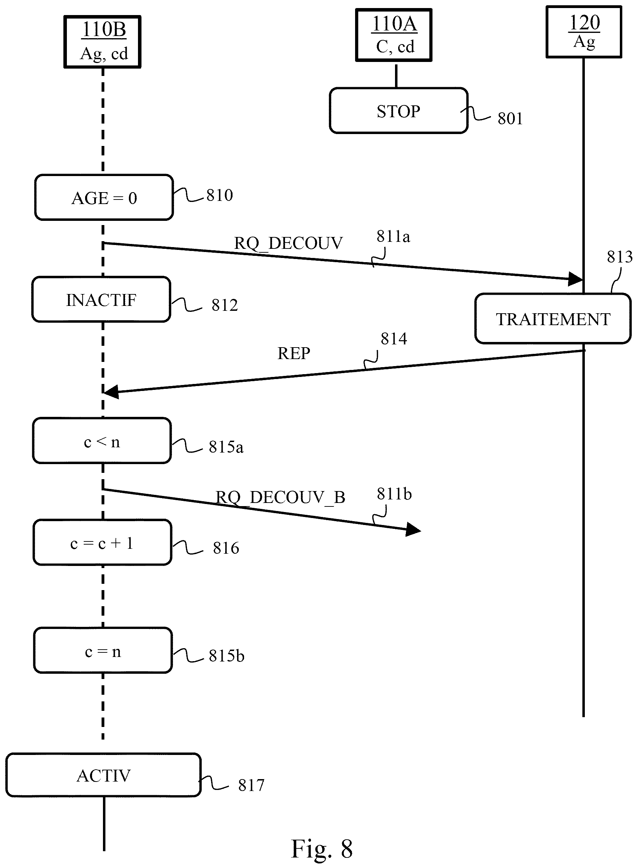

Un exemple d'implémentation du procédé de gestion par l'équipement investigateur 110B lors du régime transitoire entre la première et la quatrième configuration du réseau d'acheminement 100 est décrit à la Fig. 8. Lorsque l'équipement investigateur 110B, dont la fonction contrôleur est inactive, détermine, après un nombre de requêtes de découverte émises atteignant un seuil *n*, qu'aucun équipement répondant n'assure le rôle de contrôleur C, l'équipement investigateur 110B active sa fonction contrôleur.

La **Fig. 6A** illustre schématiquement un échange de messages entre l'équipement investigateur 110A et l'équipement répondant 110C du réseau d'acheminement 100. Ledit échange de messages résulte de l'implémentation du procédé de gestion par l'équipement investigateur 110A pendant le régime transitoire entre la première configuration et la deuxième configuration du réseau d'acheminement 100. L'équipement investigateur 110A et l'équipement répondant 110C sont tous les deux pourvus du service de contrôle dynamique cd, et assurent chacun, au début du régime transitoire, le rôle de contrôleur C.

Dans une première étape 610, l'équipement investigateur 110A enregistre son âge à l'instant présent. Selon un exemple de réalisation, l'âge de l'équipement investigateur est de 10 secondes, autrement dit cela fait 10 secondes que l'équipement investigateur assure le rôle de contrôleur C.

Dans une étape suivante 611, l'équipement investigateur 110A diffuse une requête de découverte initiale RQ_DECOUV qui est reçue par l'équipement répondant 110C et destinée à rechercher tout équipement assurant le rôle de contrôleur C et tout équipement pourvu du service de contrôle dynamique cd.

Dans une étape suivante 612, l'équipement investigateur 110A détermine que sa fonction contrôleur est active à l'instant de la diffusion de la requête de découverte initiale RQ_DECOUV.

Dans une étape 613, l'équipement répondant 110C, assurant le rôle de contrôleur C et pourvu du service de contrôle dynamique cd, traite la requête de découverte initiale RQ_DECOUV. L'équipement répondant 110C étant pourvu du service de contrôle dynamique cd détermine en outre son âge à l'instant de réception de la requête de découverte initiale RQ_DECOUV, qui est de 5 secondes selon un exemple de réalisation.

Dans une étape 614, l'équipement répondant 110C envoie une réponse REP à destination de l'équipement investigateur 110A. La réponse REP comporte une information représentative du rôle de contrôleur C telle que le champ de format TLV comportant la valeur 0x00, une information représentative du service de contrôle dynamique cd telle que le champ de format TLV comportant la valeur 0x02 et une information représentative de l'âge de l'équipement répondant 110C étant égal à 5 secondes.

Dans une étape suivante 615, l'équipement investigateur 110A analyse la réponse REP reçue en provenance de l'équipement répondant 110C. L'équipement investigateur 110A détermine ainsi que l'équipement répondant 110C assure le rôle de contrôleur C et est pourvu du service de contrôle dynamique cd. L'équipement investigateur 110A obtient alors l'âge de l'équipement répondant 110C dans la réponse REP et compare son propre âge avec l'âge de l'équipement répondant 110C conformément à l'étape 207 du procédé de gestion.

L'équipement investigateur 110A détermine que l'âge de l'équipement investigateur110A, égal à 10 secondes, est supérieur à l'âge de l'équipement répondant 110C, égal à 5 secondes, et conserve alors le rôle de contrôleur C.

La **Fig. 6B** illustre schématiquement un échange de messages entre l'équipement investigateur 110C, l'équipement répondant 110A et un équipement 120 du réseau d'acheminement 100. Ledit échange de messages résulte d'un exemple d'implémentation du procédé de gestion par l'équipement investigateur 110C pendant le régime transitoire entre la première configuration et la deuxième configuration du réseau d'acheminement 100.

L'équipement investigateur 110C et l'équipement répondant 110A sont tous les deux pourvus du service de contrôle dynamique cd, et assurent chacun, au début du régime transitoire, le rôle de contrôleur C.

Dans une première étape 620, l'équipement investigateur 110C enregistre son âge à l'instant présent, ledit âge étant de 8 secondes selon un exemple de réalisation.

Dans une étape suivante 621, l'équipement investigateur 110C diffuse une requête de découverte initiale RQ_DECOUV qui est reçue par l'équipement répondant 110A.

Dans une étape suivante 622, l'équipement investigateur 110C détermine que sa fonction contrôleur est active.

Dans une étape 623, l'équipement répondant 110A traite la requête de découverte initiale RQ_DECOUV. L'équipement répondant 110A étant pourvu du service de contrôle dynamique cd détermine son âge à l'instant de réception de la requête de découverte initiale RQ_DECOUV, ledit âge étant de 14 secondes selon un exemple de réalisation.

Dans une étape 624, l'équipement répondant 110A envoie une réponse REP à destination de l'équipement investigateur 110C. La réponse REP comporte une information représentative du rôle de contrôleur C telle que le champ de format TLV comportant la valeur 0x00, une information représentative du service de contrôle dynamique cd telle que le champ de format TLV comportant la valeur 0x02 et une information représentative de l'âge de l'équipement répondant 110C égal à 14 secondes.

Dans une étape suivante 625, l'équipement investigateur 110C analyse la réponse REP reçue en provenance de l'équipement répondant 110A. L'équipement investigateur 110C détermine ainsi que l'équipement répondant 110A assure le rôle de contrôleur C et est pourvu du service de contrôle dynamique cd. L'équipement investigateur 110C obtient alors l'âge de l'équipement répondant 110A dans la réponse REP et compare son propre âge, égal à 8 secondes, avec l'âge de l'équipement répondant 110A, égal à 14 secondes, conformément à l'étape 207 du procédé de gestion. L'équipement investigateur 110C détermine que l'âge de l'équipement investigateur 110C est inférieur à l'âge de l'équipement répondant 110A.

Dans une étape 626, l'équipement investigateur 110C désactive la fonction contrôleur conformément à l'étape 208 du procédé de gestion.

Dans une étape 627 suivante, l'équipement investigateur 110C diffuse dans le réseau d'acheminement 100 un message de changement de configuration CONFIG_RENEW comportant un identifiant de l'équipement répondant 110A. Le message de changement de configuration CONFIG_RENEW est par exemple reçu par un équipement 120 du réseau d'acheminement 100.

La **Fig. 7A** illustre schématiquement un échange de messages entre l'équipement investigateur 110A, l'équipement répondant 130 et un équipement 120 du réseau d'acheminement 100. Ledit échange de messages résulte d'un exemple d'implémentation du procédé de gestion par l'équipement investigateur 110A pendant le régime transitoire entre la première configuration et la troisième configuration du réseau d'acheminement 100.

L'équipement investigateur 110A et l'équipement répondant 130 assurent chacun, au début du régime transitoire, le rôle de contrôleur C. L'équipement investigateur 110A est pourvu du service de contrôle dynamique tandis que l'équipement répondant 130 est dépourvu du service de contrôle dynamique.

Dans une première étape 710, l'équipement investigateur 110A enregistre son âge à l'instant présent.

Dans une étape suivante 711, l'équipement investigateur 110A diffuse une requête de découverte initiale RQ_DECOUV qui est reçue par l'équipement répondant 130 et qui indique une recherche de tout équipement exécutant la fonction de contrôleur et de tout équipement pourvu du service de contrôle dynamique cd.

Dans une étape suivante 712, l'équipement investigateur 110A détermine que sa fonction contrôleur est active au moment de la diffusion de la requête de découverte initiale RQ_DECOUV.

Dans une étape 713, l'équipement répondant 130 traite la requête de découverte initiale RQ_DECOUV.

Dans une étape 714, l'équipement répondant 130 envoie une réponse REP à destination de l'équipement investigateur 110A. La réponse REP comporte une information représentative du rôle de contrôleur C telle que le champ de format TLV comportant la valeur 0x00. La réponse REP ne comporte pas d'information représentative du service de contrôle dynamique cd.

Dans une étape 715 suivante, l'équipement investigateur 110A analyse la réponse REP reçue en provenance de l'équipement répondant 130. L'équipement investigateur 110A détermine ainsi que l'équipement répondant 130 assure le rôle de contrôleur C et est dépourvu du service de contrôle dynamique cd. L'équipement investigateur 110A décide alors de désactiver sa fonction contrôleur conformément à l'étape 207 du procédé de gestion.

Dans une étape 716 suivante, similaire à l'étape 208 du procédé de gestion, l'équipement investigateur 110A désactive sa fonction contrôleur.

Dans une étape 717 suivante, similaire à l'étape 209 du procédé de gestion, l'équipement investigateur diffuse dans le réseau d'acheminement 100 un message de changement de configuration CONFIG_RENEW, qui est reçu par exemple par l'équipement 120.

La **Fig. 7B** illustre schématiquement un échange de messages entre l'équipement investigateur 110A et l'équipement répondant 130 du réseau d'acheminement 100. Ledit échange de messages résulte d'un exemple d'implémentation du procédé de gestion, selon un premier mode de réalisation, par l'équipement investigateur 110A pendant le régime permanent associé à la troisième configuration du réseau d'acheminement 100. Pendant ledit régime permanent, seul l'équipement répondant 130 assure le rôle de contrôleur C. L'équipement investigateur 110A est pourvu du service de contrôle dynamique tandis que l'équipement répondant 130 est dépourvu du service de contrôle dynamique.

Dans une première étape 720, l'équipement investigateur 110A enregistre son âge à l'instant présent. L'âge de l'équipement investigateur 110A est nul puisque l'équipement investigateur n'assure pas le rôle de contrôleur C.

Dans une étape suivante 721, l'équipement investigateur 110A diffuse une requête de découverte initiale RQ_DECOUV qui est reçue par l'équipement répondant 130.

Dans une étape suivante 722, l'équipement investigateur 110A détermine que sa fonction contrôleur est inactive au moment de la diffusion de la requête de découverte initiale RQ_DECOUV. L'équipement investigateur 110A initialise alors un compteur c conformément à l'étape 301 du procédé de gestion.

Dans une étape 723, l'équipement répondant 130 traite la requête de découverte initiale RQ_DECOUV.

Dans une étape 724, l'équipement répondant 130 envoie une réponse REP à destination de l'équipement investigateur 110A. La réponse REP comporte une information représentative du rôle de contrôleur C telle que le champ de format TLV comportant la valeur 0x00. La réponse REP ne comporte pas d'information représentative du service de contrôle dynamique cd.

Dans une étape suivante 725, l'équipement investigateur 110A analyse la réponse REP reçue en provenance de l'équipement répondant 130. L'équipement investigateur 110A détermine ainsi que l'équipement répondant 130 assure le rôle de contrôleur C. L'équipement investigateur 110A décide alors de maintenir sa fonction contrôleur inactive et attend l'écoulement du premier délai prédéfini conformément à l'étape 310 du procédé de gestion avant d'implémenter à nouveau les étapes du procédé de gestion.

La **Fig. 8** illustre schématiquement un exemple d'implémentation du procédé de gestion selon un premier mode de réalisation par l'équipement investigateur 110B pendant le régime transitoire entre la première configuration et la quatrième configuration du réseau d'acheminement 100. L'équipement investigateur 110B est pourvu du service de contrôle dynamique et n'assure pas, en début de régime transitoire, le rôle de contrôleur C (autrement dit, l'équipement investigateur 110B exécute uniquement la fonction agent Ag).

Dans une première étape 801, l'équipement 110A, qui assure le rôle de contrôleur C dans la première configuration du réseau d'acheminement 100, est supprimé du réseau d'acheminement 100, par exemple en raison d'une extinction ou d'une déconnexion dudit équipement 110A.

Dans une étape 810, l'équipement investigateur 110B enregistre son âge à l'instant présent.

Dans une étape 811a suivante, l'équipement investigateur 110B diffuse une requête de découverte initiale RQ_DECOUV dans le réseau d'acheminement 100. La requête de découverte initiale RQ_DECOUV peut être reçue par un équipement 120 mais ne peut être reçue par l'équipement 110A qui est éteint ou déconnecté du réseau d'acheminement 100.

Dans une étape suivante 812, l'équipement investigateur 110B détermine que sa fonction contrôleur est inactive au moment de la diffusion de la requête de découverte initiale RQ_DECOUV. L'équipement investigateur 110B initialise alors un compteur *c* conformément à l'étape 301 du procédé de gestion, par exemple *c* = *0*.

Dans une étape 813 suivante, un équipement 120 répondant traite la requête de découverte initiale RQ_DECOUV.

Dans une étape 814 suivante, l'équipement répondant 120 transmet une réponse REP à destination de l'équipement investigateur 110B. La réponse REP ne comporte pas d'information représentative du rôle de contrôleur C ni d'information représentative du service de contrôle dynamique.

Dans une étape 815a suivante, l'équipement investigateur 110B détermine que l'équipement répondant 120 n'assure pas le rôle de contrôleur C et considère en outre que le deuxième délai prédéfini est écoulé depuis la diffusion de la requête de découverte initiale RQ_DECOUV. L'équipement investigateur 110B compare le compteur *c* au seuil *n* et détermine que le compteur c est inférieur au seuil *n,* par exemple *n* = *1*.

Dans une étape 811b suivante, l'équipement investigateur 110B diffuse une requête de découverte additionnelle RQ_DECOUV_B dans le réseau d'acheminement 100, conformément à l'étape 306 du procédé de gestion. La requête de découverte additionnelle RQ_DECOUV_B ne peut être reçue par l'équipement 110A. Selon un exemple de réalisation, la requête de découverte additionnelle RQ_DECOUV_B n'est pas non plus reçue par un autre équipement du réseau d'acheminement 100. Alternativement, la requête de découverte RQ_DECOUV_B pourrait être reçue par un équipement 120 du réseau d'acheminement de manière similaire à la requête de découverte initiale RQ_DECOUV à l'étape 811a.

Dans une étape 816 suivante. L'équipement investigateur 110B incrémente le compteur *c*, conformément à l'étape 306 du procédé de gestion, par exemple c = *1*.

Dans une étape 815b suivante, l'équipement investigateur 110B n'ayant pas reçu de réponse après le deuxième délai prédéfini suivant la diffusion de la requête de découverte additionnelle RQ_DECOUV _B précédente compare le compteur *c* au seuil *n*, conformément à l'étape 305 du procédé de gestion. L'équipement investigateur 110B détermine que le compteur *c* a atteint le seuil *n,* par exemple *n* = *1*.

Dans une étape 817 suivante, l'équipement investigateur 110B active alors la fonction contrôleur, conformément à l'étape 308 du procédé de gestion.

## Revendications

1. Procédé de gestion d'une fonction contrôleur d'un équipement investigateur, ledit équipement investigateur appartenant à un réseau d'acheminement (100), le réseau d'acheminement (100) comportant une pluralité d'équipements (110A, 110B, 110C, 120, 130), chaque équipement du réseau d'acheminement étant capable de gérer un réseau sans fil de sorte que le réseau d'acheminement (100) mette à disposition un réseau sans fil unifié, au moins un équipement du réseau d' acheminement (100) comportant la fonction contrôleur, chaque équipement comportant la fonction contrôleur assurant un rôle de contrôleur (C) impliquant de gérer le réseau d'acheminement (100) lorsque la fonction contrôleur dudit équipement est active,
le procédé étant **caractérisé en ce que** l'équipement investigateur est pourvu d'un service de contrôle dynamique (cd), chaque équipement pourvu du service de contrôle dynamique (cd) comportant la fonction contrôleur et comportant la capacité d'activer et de désactiver la fonction contrôleur sans nécessiter de redémarrage, et **en ce que** le procédé est implémenté par l'équipement investigateur et comporte les étapes de :
- enregistrer (201) un âge de l'équipement investigateur, l'âge d'un équipement étant une durée, déterminée à un instant donné, depuis laquelle ledit équipement assure le rôle de contrôleur (C),
- diffuser (201), dès qu'un âge de l'équipement investigateur est enregistré, une requête de découverte initiale destinée à identifier tout équipement du réseau d'acheminement (100) assurant le rôle de contrôleur (C),
- déterminer (205), pour chaque réponse à la requête de découverte initiale reçue en provenance d'un équipement, dit équipement répondant, que l'équipement répondant assure le rôle de contrôleur (C) selon une information représentative du rôle de contrôleur (C) présente dans la réponse reçue,
et le procédé comporte en outre, lorsque la fonction contrôleur de l'équipement investigateur est active à l'instant de la diffusion de la requête de découverte initiale, les étapes de :
- obtenir (207), dans la réponse reçue, l'âge de l'équipement répondant, et
- désactiver (208) la fonction contrôleur de l'équipement investigateur si l'âge de l'équipement investigateur est inférieur à l'âge de l'équipement répondant.

2. Procédé selon la revendication 1, **caractérisé en ce que** la requête de découverte initiale est en outre destinée à identifier tout équipement du réseau d'acheminement (100) pourvu du service de contrôle dynamique (cd), **en ce que** le procédé comporte en outre :
- déterminer (206), pour chaque réponse à la requête de découverte initiale reçue en provenance d'un équipement répondant, que l'équipement répondant est pourvu du service de contrôle dynamique (cd) selon une information représentative du service de contrôle dynamique (cd) présente dans la réponse reçue,
- désactiver (208) la fonction contrôleur de l'équipement investigateur si l'équipement répondant assure le rôle de contrôleur (C) et est dépourvu du service de contrôle dynamique (cd), lorsque la fonction contrôleur de l'équipement investigateur est active (203) à l'instant de la diffusion de la requête de découverte initiale,
et **en ce que** l'étape d'obtenir (207), dans la réponse reçue, l'âge de l'équipement répondant, est effectuée si l'équipement répondant assurant le rôle de contrôleur (C) est en outre pourvu du service de contrôle dynamique (cd).

3. Procédé selon l'une des revendications 1 et 2, **caractérisé en ce qu'**il comporte en outre :
- émettre (209) dans le réseau d'acheminement (100) un message de changement de configuration lorsque l'équipement investigateur désactive la fonction contrôleur, le message de changement de configuration comportant un identifiant de l'équipement répondant assurant le rôle de contrôleur (C) de sorte que chaque autre équipement peut envoyer audit équipement répondant une demande de renouvellement de configuration.

4. Procédé selon l'une des revendications 1 à 3, **caractérisé en ce que** le procédé comporte en outre, lorsque la fonction contrôleur de l'équipement investigateur est inactive (203) à l'instant de la diffusion de la requête de découverte initiale :
- Diffuser (306) une requête de découverte additionnelle identique à la requête de découverte initiale lorsqu'aucune réponse reçue pendant un premier délai prédéfini suivant la diffusion de la requête de découverte précédente ne permet d'identifier un autre équipement du réseau d'acheminement (100) assurant le rôle de contrôleur (C),
- Activer (308) la fonction contrôleur dudit équipement lorsque le nombre de requêtes de découverte additionnelles émises atteint un seuil prédéterminé (305) et si aucune réponse reçue pendant le premier délai prédéfini suivant la diffusion de la requête de découverte précédente ne permet d'identifier un autre équipement du réseau d'acheminement (100) assurant le rôle de contrôleur (C).

5. Procédé selon l'une des revendications 1 à 3, **caractérisé en ce que** le procédé comporte en outre, lorsque la fonction contrôleur de l'équipement investigateur est inactive (203) à l'instant de la diffusion de la requête de découverte initiale :
- Diffuser (306) une requête de découverte additionnelle identique à la requête de découverte initiale lorsqu'aucune réponse reçue pendant un premier délai prédéfini suivant la diffusion de la requête de découverte précédente ne permet d'identifier un autre équipement du réseau d'acheminement (100) assurant le rôle de contrôleur (C),
- Activer (308) la fonction contrôleur dudit équipement lorsqu'aucune réponse reçue ne permet d'identifier un autre équipement du réseau d'acheminement (100) assurant le rôle de contrôleur (C), et si un deuxième délai prédéfini compté à partir de la diffusion de la requête de découverte initiale est écoulé (314), le deuxième délai prédéfini étant supérieur au premier délai prédéfini.

6. Procédé selon l'une des revendications 1 à 5, **caractérisé en ce que** le procédé comporte en outre :
- Enregistrer un nouvel âge de l'équipement investigateur et diffuser une nouvelle requête de découverte initiale lorsque le premier délai prédéfini compté à partir de la diffusion de la requête de découverte initiale précédente est écoulé (210, 220, 310).

7. Procédé selon l'une quelconque des revendications 1 à 6, **caractérisé en ce que** chaque étape d'activer ou de désactiver la fonction contrôleur est effectuée si aucune activation ou désactivation de la fonction contrôleur de l'équipement investigateur n'a été effectuée depuis la diffusion de la requête initiale précédente.

8. Equipement investigateur appartenant à un réseau d'acheminement (100), le réseau d'acheminement (100) comportant une pluralité d'équipements, chaque équipement du réseau d'acheminement (100) étant capable de gérer un réseau sans fil de sorte que le réseau d'acheminement mette à disposition un réseau sans fil unifié,
au moins un équipement du réseau d'acheminement (100) comportant la fonction contrôleur, chaque équipement comportant la fonction contrôleur assurant un rôle de contrôleur (C) impliquant de gérer le réseau d'acheminement (100) lorsque la fonction contrôleur dudit équipement est active,
l'équipement investigateur étant **caractérisé en ce qu'**il est pourvu d'un service de contrôle dynamique (cd), chaque équipement pourvu du service de contrôle dynamique comportant la fonction contrôleur et comportant la capacité d'activer et de désactiver la fonction contrôleur sans nécessiter de redémarrage, et **en ce qu'**il comporte :
- des moyens pour enregistrer (201) un âge de l'équipement investigateur, l'âge d'un équipement étant une durée, déterminée à un instant donné, depuis laquelle ledit équipement assure le rôle de contrôleur (C),
- des moyens pour diffuser (201), dès qu'un âge de l'équipement investigateur est enregistré, une requête de découverte initiale destinée à identifier tout équipement du réseau d'acheminement (100) assurant le rôle de contrôleur (C),
- des moyens pour déterminer (205), pour chaque réponse à la requête de découverte initiale reçue en provenance d'un équipement, dit équipement répondant, que l'équipement répondant assure le rôle de contrôleur (C) selon une information représentative du rôle de contrôleur (C) présente dans la réponse reçue,
et l'équipement investigateur comporte en outre :
- des moyens pour obtenir (207), dans la réponse reçue, l'âge de l'équipement répondant lorsque la fonction contrôleur de l'équipement investigateur est active à l'instant de la diffusion de la requête de découverte initiale, et
- des moyens pour désactiver (208) la fonction contrôleur de l'équipement investigateur si l'âge de l'équipement investigateur est inférieur à l'âge de l'équipement répondant.

9. Réseau d'acheminement (100) **caractérisé en ce que** le procédé selon l'une des revendications 1 à 7 est implémenté par chaque équipement pourvu du service de contrôle dynamique du réseau d'acheminement (100).

10. Programme d'ordinateur pouvant être stocké sur un support et/ou téléchargé d'un réseau de communication, afin d'être lu par un processeur, et **caractérisé en ce qu'**il comprend des instructions pour implémenter le procédé selon l'une des revendications 1 à 7, lorsque ledit programme est exécuté par le processeur.

11. Support de stockage d'informations stockant un programme d'ordinateur selon la revendication précédente.

## Patentansprüche

1. Verfahren zur Verwaltung einer Controller-Funktion einer Investigator-Einrichtung, wobei die Investigator-Einrichtung zu einem Routing-Netzwerk (100) gehört, wobei das Routing-Netzwerk (100) eine Mehrzahl von Einrichtungen (110A, 110B, 110C, 120, 130) umfasst, wobei jede Einrichtung des Routing-Netzwerks in der Lage ist, ein drahtloses Netzwerk so zu verwalten, dass das Routing-Netzwerk (100) ein vereinheitlichtes drahtloses Netzwerk bereitstellt, wobei mindestens eine Einrichtung des Routing-Netzwerks (100) die Controller-Funktion umfasst, wobei jede die Controller-Funktion umfassende Einrichtung eine Controller-Rolle (C) wahrnimmt, die impliziert, das Routing-Netzwerk (100) zu verwalten, wenn die Controller-Funktion der Einrichtung aktiv ist,
wobei das Verfahren **dadurch gekennzeichnet ist, dass** die Investigator-Einrichtung mit einem dynamischen Steuerungsdienst (cd) versehen ist, wobei jede mit dem dynamischen Steuerungsdienst (cd) versehene Einrichtung die Controller-Funktion umfasst und die Fähigkeit umfasst, die Controller-Funktion zu aktivieren und zu deaktivieren, ohne einen Neustart zu erfordern, und dadurch, dass das Verfahren von der Investigator-Einrichtung implementiert wird und die folgenden Schritte umfasst:
- Registrieren (201) eines Alters der Investigator-Einrichtung, wobei das Alter einer Einrichtung eine zu einem gegebenen Zeitpunkt bestimmte Dauer ist, seit der die Einrichtung die Controller-Rolle (C) wahrnimmt,
- Ausgeben (201), sobald ein Alter der Investigator-Einrichtung registriert wurde, einer anfänglichen Discovery-Anforderung, die dazu bestimmt ist, jede Einrichtung des Routing-Netzwerks (100) zu identifizieren, die die Controller-Rolle (C) wahrnimmt,
- Bestimmen (205), für jede Antwort auf die anfängliche Discovery-Anforderung, die von einer Einrichtung, antwortende Einrichtung genannt, empfangen wird, dass die antwortende Einrichtung die Controller-Rolle (C) wahrnimmt, gemäß einer in der empfangenen Antwort vorhandenen Information, die für die Controller-Rolle (C) repräsentativ ist,
und das Verfahren ferner, wenn die Controller-Funktion der Investigator-Einrichtung zum Zeitpunkt des Ausgebens der anfänglichen Discovery-Anforderung aktiv ist, die folgenden Schritte:
- Erhalten (207), in der empfangenen Antwort, des Alters der antwortenden Einrichtung, und
- Deaktivieren (208) der Controller-Funktion der Investigator-Einrichtung, falls das Alter der Investigator-Einrichtung geringer als das Alter der antwortenden Einrichtung ist.

2. Verfahren nach Anspruch 1, **dadurch gekennzeichnet, dass** die anfängliche Discovery-Anforderung ferner dazu bestimmt ist, jede Einrichtung des Routing-Netzwerks (100) zu identifizieren, die mit dem dynamischen Steuerungsdienst (cd) versehen ist, dadurch, dass das Verfahren ferner Folgendes umfasst:
- Bestimmen (206), für jede Antwort auf die anfängliche Discovery-Anforderung, die von einer antwortenden Einrichtung empfangen wird, dass die antwortende Einrichtung mit dem dynamischen Steuerungsdienst (cd) versehen ist, gemäß einer in der empfangenen Antwort vorhandenen Information, die für den dynamischen Steuerungsdienst (cd) repräsentativ ist,
- Deaktivieren (208) der Controller-Funktion der Investigator-Einrichtung, falls die antwortende Einrichtung die Controller-Rolle (C) wahrnimmt und nicht mit dem dynamischen Steuerungsdienst (cd) versehen ist, wenn die Controller-Funktion der Investigator-Einrichtung zum Zeitpunkt des Ausgebens der anfänglichen Discovery-Anforderung aktiv ist (203),
und dadurch, dass der Schritt des Erhaltens (207), in der empfangenen Antwort, des Alters der antwortenden Einrichtung durchgeführt wird, falls die antwortende Einrichtung, die die Controller-Rolle (C) wahrnimmt, ferner mit dem dynamischen Steuerungsdienst (cd) versehen ist.

3. Verfahren nach einem der Ansprüche 1 und 2, **dadurch gekennzeichnet, dass** es ferner Folgendes umfasst:
- Senden (209), in dem Routing-Netzwerk (100), einer Konfigurationsänderungsnachricht, wenn die Investigator-Einrichtung die Controller-Funktion deaktiviert, wobei die Konfigurationsänderungsnachricht eine Kennung der die Controller-Rolle (C) wahrnehmenden antwortenden Einrichtung umfasst, so dass jede andere Einrichtung an die antwortende Einrichtung eine Konfigurationserneuerungsanfrage senden kann.

4. Verfahren nach einem der Ansprüche 1 bis 3, **dadurch gekennzeichnet, dass** das Verfahren ferner, wenn die Controller-Funktion der Investigator-Einrichtung zum Zeitpunkt des Ausgebens der anfänglichen Discovery-Anforderung inaktiv ist (203), Folgendes umfasst:
- Ausgeben (306) einer zusätzlichen Discovery-Anforderung, die identisch mit der anfänglichen Discovery-Anforderung ist, wenn keine während einer vorgegebenen ersten Frist nach dem Ausgeben der vorhergehenden Discovery-Anforderung empfangene Antwort es ermöglicht, eine andere Einrichtung des Routing-Netzwerks (100) zu identifizieren, die die Controller-Rolle (C) wahrnimmt,
- Aktivieren (308) der Controller-Funktion der Einrichtung, wenn die Anzahl der gesendeten zusätzlichen Discovery-Anforderungen einen vorbestimmten Schwellenwert erreicht (305) und falls keine während der vorgegebenen ersten Frist nach dem Ausgeben der vorhergehenden Discovery-Anforderung empfangene Antwort es ermöglicht, eine andere Einrichtung des Routing-Netzwerks (100) zu identifizieren, die die Controller-Rolle (C) wahrnimmt.

5. Verfahren nach einem der Ansprüche 1 bis 3, **dadurch gekennzeichnet, dass** das Verfahren ferner, wenn die Controller-Funktion der Investigator-Einrichtung zum Zeitpunkt des Ausgebens der anfänglichen Discovery-Anforderung inaktiv ist (203), Folgendes umfasst:
- Ausgeben (306) einer zusätzlichen Discovery-Anforderung, die identisch mit der anfänglichen Discovery-Anforderung ist, wenn keine während einer vorgegebenen ersten Frist nach dem Ausgeben der vorhergehenden Discovery-Anforderung empfangene Antwort es ermöglicht, eine andere Einrichtung des Routing-Netzwerks (100) zu identifizieren, die die Controller-Rolle (C) wahrnimmt,
- Aktivieren (308) der Controller-Funktion der Einrichtung, wenn keine empfangene Antwort es ermöglicht, eine andere Einrichtung des Routing-Netzwerks (100) zu identifizieren, die die Controller-Rolle (C) wahrnimmt, und falls eine vorgegebene zweite Frist, die ab dem Ausgeben der anfänglichen Discovery-Anforderung gezählt wird, verstrichen ist (314), wobei die vorgegebene zweite Frist länger als die vorgegebene erste Frist ist.

6. Verfahren nach einem der Ansprüche 1 bis 5, **dadurch gekennzeichnet, dass** das Verfahren ferner Folgendes umfasst:
- Registrieren eines neuen Alters der Investigator-Einrichtung und Ausgeben einer neuen anfänglichen Discovery-Anforderung, wenn die vorgegebene erste Frist, die ab dem Ausgeben der vorhergehenden anfänglichen Discovery-Anforderung gezählt wird, verstrichen ist (210, 220, 310).

7. Verfahren nach einem der Ansprüche 1 bis 6, **dadurch gekennzeichnet, dass** jeder Schritt des Aktivierens oder Deaktivierens der Controller-Funktion durchgeführt wird, falls keine Aktivierung oder Deaktivierung der Controller-Funktion der Investigator-Einrichtung seit dem Ausgeben der vorhergehenden anfänglichen Anforderung durchgeführt worden ist.

8. Investigator-Einrichtung, die zu einem Routing-Netzwerk (100) gehört, wobei das Routing-Netzwerk (100) eine Mehrzahl von Einrichtungen umfasst, wobei jede Einrichtung des Routing-Netzwerks (100) in der Lage ist, ein drahtloses Netzwerk zu verwalten, so dass das Routing-Netzwerk ein vereinheitlichtes drahtloses Netzwerk bereitstellt,
wobei mindestens eine Einrichtung des Routing-Netzwerks (100) die Controller-Funktion umfasst, wobei jede die Controller-Funktion umfassende Einrichtung eine Controller-Rolle (C) wahrnimmt, die impliziert, das Routing-Netzwerk (100) zu verwalten, wenn die Controller-Funktion der Einrichtung aktiv ist,
wobei die Investigator-Einrichtung **dadurch gekennzeichnet ist, dass** sie mit einem dynamischen Steuerungsdienst (cd) versehen ist, wobei jede mit dem dynamischen Steuerungsdienst versehene Einrichtung die Controller-Funktion umfasst und die Fähigkeit umfasst, die Controller-Funktion zu aktivieren und zu deaktivieren, ohne einen Neustart zu erfordern, und dadurch, dass sie umfasst:
- Mittel zum Registrieren (201) eines Alters der Investigator-Einrichtung, wobei das Alter einer Einrichtung eine zu einem gegebenen Zeitpunkt bestimmte Dauer ist, seit der die Einrichtung die Controller-Rolle (C) wahrnimmt,
- Mittel zum Ausgeben (201), sobald ein Alter der Investigator-Einrichtung registriert wurde, einer anfänglichen Discovery-Anforderung, die dazu bestimmt ist, jede Einrichtung des Routing-Netzwerks (100) zu identifizieren, die die Controller-Rolle (C) wahrnimmt,
- Mittel zum Bestimmen (205), für jede Antwort auf die anfängliche Discovery-Anforderung, die von einer Einrichtung, antwortende Einrichtung genannt, empfangen wird, dass die antwortende Einrichtung die Controller-Rolle (C) wahrnimmt, gemäß einer in der empfangenen Antwort vorhandenen Information, die für die Controller-Rolle (C) repräsentativ ist,
und die Investigator-Einrichtung ferner umfasst:
- Mittel zum Erhalten (207), in der empfangenen Antwort, des Alters der antwortenden Einrichtung, wenn die Controller-Funktion der Investigator-Einrichtung zum Zeitpunkt des Ausgebens der anfänglichen Discovery-Anforderung aktiv ist, und
- Mittel zum Deaktivieren (208) der Controller-Funktion der Investigator-Einrichtung, falls das Alter der Investigator-Einrichtung geringer als das Alter der antwortenden Einrichtung ist.

9. Routing-Netzwerk (100), **dadurch gekennzeichnet, dass** das Verfahren nach einem der Ansprüche 1 bis 7 von jeder mit dem dynamischen Steuerungsdienst versehenen Einrichtung des Routing-Netzwerks (100) implementiert wird.

10. Computerprogramm, das auf einem Medium gespeichert und/oder von einem Kommunikationsnetzwerk heruntergeladen werden kann, um von einem Prozessor gelesen zu werden, und **dadurch gekennzeichnet ist, dass** es Anweisungen umfasst, um das Verfahren nach einem der Ansprüche 1 bis 7 implementieren, wenn das Programm von dem Prozessor ausgeführt wird.

11. Medium zum Speichern von Informationen, das ein Computerprogramm nach dem vorhergehenden Anspruch speichert.

## Claims

1. Method for managing a controller function of an item of investigator equipment, said investigator equipment belonging to a backhaul network (100), the backhaul network (100) comprising a plurality of items of equipment (110A, 110B, 110C, 120, 130), each item of equipment in the backhaul network being capable of managing a wireless network so that the backhaul network (100) makes available a unified wireless network, at least one item of equipment of the backhaul network (100) comprising a controller function, each item of equipment comprising the controller function fulfilling a role of controller (C) involving managing the backhaul network (100) when the controller function of said equipment is active, the method being **characterised in that** the investigator equipment is provided with a dynamic control service (cd), each item of equipment provided with a dynamic control service (cd) comprising the controller function and comprising the ability to activate and deactivate the controller function without requiring rebooting, and **in that** the method is implemented by the investigator equipment and comprises the steps of:
- recording (201) an age of the investigator equipment, the age of an item of equipment being a time, determined at a given instant, since which said item of equipment has fulfilled the role of controller (C),
- broadcasting (201), as soon as an age of the investigator equipment is recorded, an initial discovery request intended to identify any equipment in the backhaul network (100) fulfilling the role of controller (C),
- determining (205), for each response to the initial discovery request received coming from an item of equipment, referred to as responding equipment, that the responding equipment fulfils the role of controller (C) according to information representing the role of controller (C) present in the response received,
and the method furthermore comprises, when the controller function of the investigator equipment is active at the instant of broadcasting the initial discovery request, the steps of:
- obtaining (207), in the response received, the age of the responding equipment, and
- deactivating (208) the controller function of the investigator equipment if the age of the investigator equipment is less than the age of the responding equipment.

2. Method according to claim 1, **characterised in that** the initial discovery request is furthermore intended to identify any equipment in the backhaul network (100) provided with the dynamic control service (cd), and **in that** the method furthermore comprises:
- determining (206), for each response to the initial discovery request received coming from responding equipment, that the responding equipment is provided with the dynamic control service (cd) according to information representing the dynamic control service present in the response received,
- deactivating (208) the controller function of the investigator equipment if the responding equipment fulfils the role of controller (C) and lacks the dynamic control service (cd), when the controller function of the investigator equipment is active (203) at the instant of broadcasting of the initial discovery request,
and **in that** the step of obtaining (207), in the response received, the age of the responding equipment is performed if the responding equipment fulfilling the role of controller (C) is furthermore provided with the dynamic control service (cd).

3. Method according to one of claims 1 and 2, **characterised in that** it furthermore comprises:
- sending (209), in the backhaul network (100), a configuration change message when the investigator equipment deactivates the controller function, the configuration change message comprising an identifier of the responding equipment fulfilling the role of controller (C) so that each other item of equipment can send to said responding equipment a configuration renewal request.

4. Method according to one of claims 1 to 3, **characterised in that** the method furthermore comprises, when the controller function of the investigator equipment is inactive (203) at the instant of broadcasting of the initial discovery request:
- broadcasting (306) an additional discovery request identical to the initial discovery request when no response received during a first predefined period following the broadcasting of the previous discovery request makes it possible to identify another item of equipment of the backhaul network (100) fulfilling the role of controller (C),
- activating (308) the controller function of said equipment when the number of additional discovery requests sent reaches a predetermined threshold (305) and if no response received during the first predefined period following the broadcasting of the previous discovery request makes it possible to identify another item of equipment of the backhaul network (100) fulfilling the role of controller (C).

5. Method according to one of claims 1 to 3, **characterised in that** the method furthermore comprises, when the controller function of the investigator equipment is inactive (203) at the instant of broadcasting of the initial discovery request:
- broadcasting (306) an additional discovery request identical to the initial discovery request when no response received during a first predefined period following the broadcasting of the previous discovery request makes it possible to identify another item of equipment of the backhaul network (100) fulfilling the role of controller (C),
- activating (308) the controller function of said equipment when no response received makes it possible to identify another item of equipment of the backhaul network (100) fulfilling the role of controller (C), and if a second predefined period counted as from the broadcasting of the initial discovery request has elapsed (314), the second predefined period being greater than the first predefined period.

6. Method according to one of claims 1 to 5, **characterised in that** the method furthermore comprises:
- recording a new age of the investigator equipment and broadcasting a new initial discovery request when the first predefined period counted as from the broadcasting of the previous initial discovery request has elapsed (210, 220, 310).

7. Method according to any one of claims 1 to 6, **characterised in that** each step of activating or deactivating the controller function is performed if no activation or deactivation of the controller function of the investigator equipment has been implemented since the broadcasting of the previous initial request.

8. Investigator equipment belonging to a backhaul network (100), the backhaul network (100) comprising a plurality of items of equipment, each item of equipment in the backhaul network (100) being capable of managing a wireless network so that the backhaul network makes available a unified wireless network,
at least one item of equipment of the backhaul network (100) comprising the controller function, each item of equipment comprising the controller function fulfilling a role of controller (C) involving managing the backhaul network (100) when the controller function of said equipment is active,
the investigator equipment being **characterised in that** it is provided with a dynamic control service (cd), each item of equipment provided with the dynamic control service comprising the controller function and comprising the ability to activate and deactivate the controller function without needing rebooting, and **in that** it comprises:
- means for recording (201) an age of the investigator equipment, the age of an item of equipment being a period, determined at a given instant, since which said item of equipment has fulfilled the role of controller (C),
- means for broadcasting (201), as soon as an age of the investigator equipment is recorded, an initial discovery request intended to identify any equipment in the backhaul network (100) fulfilling the role of controller (C),
- means for determining (205), for each response to the initial discovery request received coming from an item of equipment, referred to as responding equipment, that the responding equipment fulfils the role of controller (C) according to information representing the role of controller (C) present in the response received,
and the investigator equipment furthermore comprises:
- means for obtaining (207), in the response received, the age of the responding equipment when the controller function of the investigator equipment is active at the instant of the broadcasting of the initial discovery request, and
- means for deactivating (208) the controller function of the investigator equipment if the age of the investigator equipment is less than the age of the responding equipment.

9. Backhaul network (100) **characterised in that** the method according to one of claims 1 to 7 is implemented by each item of equipment provided with the dynamic control service of the backhaul network (100).

10. Computer program that can be stored on a medium and/or downloaded from a communication network, in order to be read by a processor, and **characterised in that** it comprises instructions for implementing the method according to one of claims 1 to 7, when said program is executed by the processor.

11. Information storage medium storing a computer program according to the preceding claim.
